# DEMANDE DE BREVET EUROPEEN

(11) **EP 2 031 433 A1**
(43) Date de publication de la demande: **04.03.2009**
(21) Numéro de dépôt: 07291049.0
(22) Date de dépôt: 30.08.2007
(51) Int. Cl.: G02C 11/06, H04M 1/60

(54) **Lanière destinée à être placée autour de la tête d'un individu et comportant un appareil de communication téléphonique sans fil**

(71) Demandeur: Modelabs Technologies Limited, Hong Kong (HK)
(72) Inventeur: Ponticelli, Guillaume, Hong Kong (HK); Olivier, Henri-Nicolas, Hong Kong (HK)
(74) Mandataire: Kedinger, Jean-Paul

(57) **Abrégé**

La présente invention se rapporte à une lanière (30) destinée à être placée en partie autour de la tête d'un individu pour l'accrochage d'une paire de lunettes (20) et comportant un ruban (31) présentant, au niveau de ses extrémités libres (32), des moyens (33) pour recevoir les branches (22) de la paire de lunettes (20), **caractérisée en ce qu**'elle comporte en outre au moins un appareil de communication téléphonique sans fil (40) pouvant être jumelé à un téléphone cellulaire, ledit appareil (40) étant destiné à être placé à proximité immédiate d'au moins une oreille (11) de l'individu en vue de reproduire un signal sonore au voisinage de celle-ci.

## Description

La présente invention concerne une lanière destinée à être placée en partie autour de la tête d'un individu pour l'accrochage d'une paire de lunettes et comportant au moins un appareil de communication téléphonique sans fil pouvant être jumelé à un téléphone cellulaire.

Actuellement, les oreillettes jumelées avec un téléphone cellulaire par l'intermédiaire d'une liaison sans fil de type Bluetooth se portent soit sur l'oreille de l'individu, soit dans son oreille. Or, cette disposition engendre un inconvénient non négligeable pour les porteurs de lunettes de soleil ou de vue dont les branches peuvent interférer avec l'oreillette. Ainsi, dans de nombreux cas, à cause de la conception et de la position de l'oreillette, il est impossible de porter des lunettes car les branches ne disposent pas d'assez de place, voire d'aucun emplacement susceptible de les recevoir.

Pour résoudre ce problème, il a été proposé des lunettes qui supportent déjà un dispositif de communication téléphonique sans fil similaire à une oreillette. Cependant, ces lunettes sont souvent encore à l'état de prototype ou bien elles sont coûteuses, lourdes, peu ergonomiques, et ne sont pas façonnées selon les critères de vue et les goûts esthétiques de l'utilisateur.

Ainsi, il n'existe à l'heure actuelle aucun dispositif pratique permettant à tout utilisateur d'oreillette de porter en même temps les lunettes de vue ou de soleil qu'il possède déjà.

- Un but de la présente invention est donc de résoudre le problème cité précédemment à l'aide d'une solution simple à mettre en oeuvre, fiable et peu coûteuse.

Ainsi, la présente invention a pour objet une lanière destinée à être placée en partie autour de la tête d'un utilisateur pour l'accrochage d'une paire de lunettes et comportant un ruban présentant, au niveau de ses extrémités libres, des moyens pour recevoir les branches de la paire de lunettes, **caractérisée en ce qu**'elle comporte en outre au moins un appareil de communication téléphonique sans fil pouvant être jumelé à un téléphone cellulaire, ledit appareil étant destiné à être placé à proximité immédiate d'au moins une oreille de l'utilisateur en vue de reproduire un signal sonore au voisinage de celle-ci.

Selon des modes de réalisation préférés, la lanière selon la présente invention peut comprendre en outre l'une au moins des caractéristiques suivantes :
- chaque extrémité du ruban est équipée d'un boîtier appartenant à l'appareil de communication téléphonique sans fil et destiné à venir se poser sur le pavillon de l'oreille de l'utilisateur ;
- l'un au moins des boîtiers renferme un organe de reproduction sonore ;
- l'organe de reproduction sonore est positionné à l'arrière du boîtier correspondant, sur une face interne de celui-ci, de manière à pouvoir être appliqué contre un os du crâne ;
- chaque organe de reproduction sonore est constitué par un haut-parleur émettant des vibrations au contact de l'os du crâne situé derrière l'oreille de l'utilisateur afin de propager le signal sonore jusqu'à celle-ci ;
- l'organe de reproduction sonore est lié au boîtier et fait saillie sur celui-ci de manière à pouvoir être introduit dans le pavillon de l'oreille de l'utilisateur afin de transmettre à celle-ci le signal sonore ;
- les moyens de réception des branches sont constitués par un orifice ménagé dans chacun des boîtiers, la paroi interne de l'orifice étant réalisé dans un matériau déformable élastiquement pour former une liaison de type amovible avec ladite branche ;
- chaque orifice est réalisé dans une partie amovible et interchangeable du boîtier ;
- le ruban est réalisé en matière souple élastiquement déformable, par exemple en mousse de néoprène ; et
- des circuits électroniques pour le fonctionnement de l'appareil de communication téléphonique sans fil sont logés dans la partie arrière du ruban.

Avantageusement, l'appareil de communication téléphonique sans fil est une oreillette à la norme Bluetooth.

L'invention va maintenant être décrite plus en détail en référence à des modes de réalisation particuliers donnés à titre d'illustration uniquement et représentés sur les figures annexées dans lesquelles :
- la figure 1 est une vue en perspective de la tête d'un individu portant une paire de lunettes reliée à une lanière d'accrochage conforme à la présente invention ;
- les figures 2 et 3 sont des vues en perspective de la lanière d'accrochage portée autour de la tête de l'individu ; et
- la figure 4 est une vue en perspective de la lanière d'accrochage.

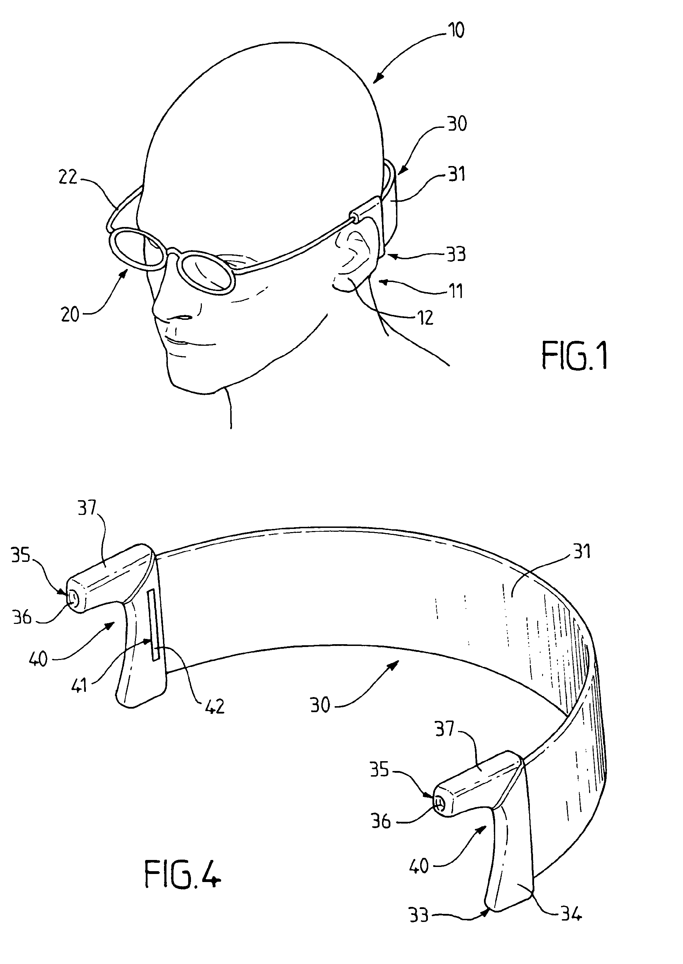

La figure 1 représente, de manière schématisée et en perspective, la tête 10 d'un individu. Cet individu porte une paire de lunettes 20, par exemple des lunettes de vue. Typiquement, ces lunettes 20 comportent des branches 22 reposant chacune localement sur le pavillon 12 de l'oreille 11 de l'individu. Plus précisément, chaque branche 22 est liée à une lanière d'accrochage 30 conforme à la présente invention.

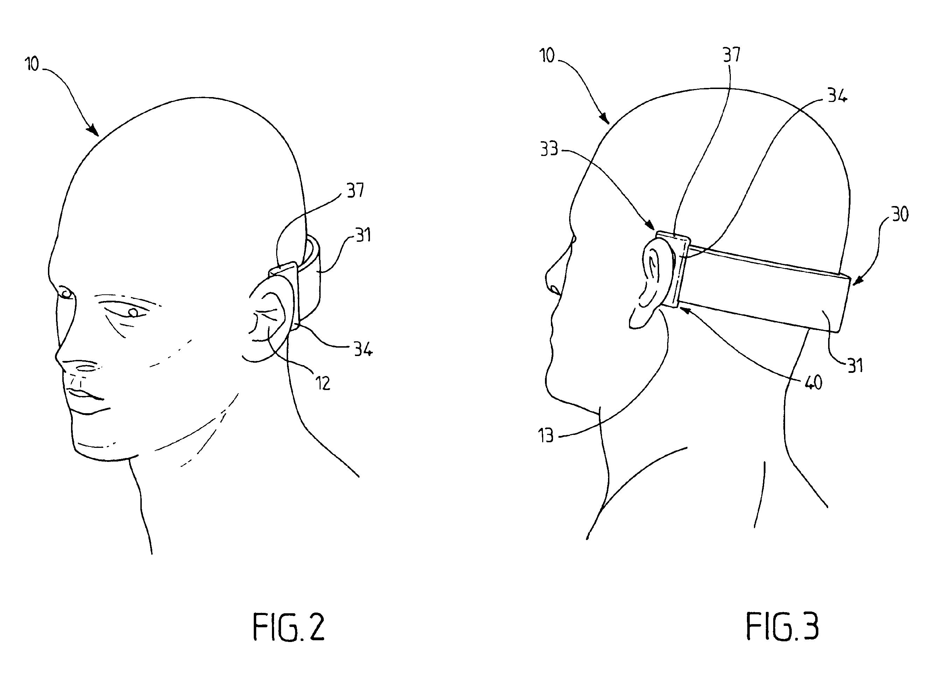

Comme cela est visible plus en détail sur les figures 2 à 4, la lanière 30 comporte un ruban 31 passant derrière la tête 10 de l'individu. Le ruban 31 est réalisé en matériau souple élastiquement déformable, par exemple de la mousse de néoprène.

Le ruban 31 comporte, au niveau de ses extrémités libres 32, des moyens 33 destinés à recevoir les branches 22 de la paire de lunettes 20. Ces moyens 33 sont constitués par deux boîtiers 34 en matière plastique présentant chacune une forme ergonomique adaptée pour épouser le dessus et l'arrière du pavillon 12 de l'oreille humaine 11. Plus précisément, chaque branche 22 pénètre dans un orifice 35 traversant chaque boîtier 34. Avantageusement, la paroi interne 36 de chaque orifice 35 présente une section et est réalisée dans un matériau déformable élastiquement tels qu'une liaison serrée, mais amovible, est réalisée avec ladite branche 22. Ainsi, l'utilisateur peut retirer ses lunettes 20 sans trop de difficultés en tirant dessus vers l'avant pour sortir les branches 22 des orifices 35, mais les lunettes 20 restent quand même bien en place sur les oreilles 11 de l'individu lorsqu'elles sont installées.

Chaque orifice 35 est réalisé dans une partie amovible et interchangeable 37 du boîtier 34, afin de pouvoir s'adapter à différents types de lunettes 20, notamment en faisant varier la section des orifices 35.

Les boîtiers 34 forment également un appareil de communication téléphonique sans fil 40 pouvant être jumelé à un téléphone cellulaire (non représenté). Bien entendu, cet appareil 40, qui est dans le cas présent une oreillette fonctionnant selon la norme Bluetooth, est placé à proximité immédiate des oreilles 11 de l'individu en vue de reproduire un signal sonore au voisinage de celles-ci.

A cet effet, au moins un des boîtiers 34 renferme un organe de reproduction sonore 41 se présentant sous la forme d'un haut-parleur membranaire vibrant 42. Ce haut-parleur 42 utilise une technologie vibratoire connue afin de transmettre le son vers l'oreille 11. Plus précisément, le haut parleur 42 est positionné à l'arrière du boîtier 34 correspondant, sur une face interne 34a de celui-ci, de manière à pouvoir être appliqué contre un os du crâne, et plus spécifiquement l'os arrondi 13 faisant saillie derrière le pavillon 12 de l'oreille 11.

Des circuits électroniques (non représentés) pour le fonctionnement de l'appareil de communication téléphonique sans fil 40 sont également logés dans la partie arrière du ruban 31.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, selon une variante de réalisation, l'organe de reproduction sonore peut être est lié au boîtier et faire saillie sur celui-ci de manière à pouvoir être introduit directement dans le pavillon 12 de l'oreille 11 de l'individu afin de transmettre à celle-ci le signal sonore.

## Revendications

1. Lanière (30) destinée à être placée en partie autour de la tête d'un individu pour l'accrochage d'une paire de lunettes (20) et comportant un ruban (31) présentant, au niveau de ses extrémités libres (32), des moyens (33) pour recevoir les branches (22) de la paire de lunettes (20), **caractérisée en ce qu'**elle comporte en outre au moins un appareil de communication téléphonique sans fil (40) pouvant être jumelé à un téléphone cellulaire, ledit appareil (40) étant destiné à être placé à proximité immédiate d'au moins une oreille (11) de l'individu en vue de reproduire un signal sonore au voisinage de celle-ci.

2. Lanière selon la revendication 1, **caractérisée en ce que** chaque extrémité (32) du ruban est équipée d'un boîtier (34) appartenant à l'appareil de communication téléphonique sans fil (40) et destiné à venir se poser sur le pavillon (12) de l'oreille (11) de l'individu.

3. Lanière selon la revendication 2, **caractérisée en ce que** l'un au moins des boîtiers (34) renferme un organe de reproduction sonore (41).

4. Lanière selon la revendication 3, **caractérisée en ce que** l'organe de reproduction sonore (41) est positionné à l'arrière du boîtier correspondant (34), sur une face interne (34a) de celui-ci, de manière à pouvoir être appliqué contre un os du crâne.

5. Lanière selon la revendication 4, **caractérisée en ce que** chaque organe de reproduction sonore (41) est constitué par un haut-parleur (42) émettant des vibrations au contact de l'os du crâne (13) situé derrière le pavillon (12) l'oreille (11) de l'individu afin de propager le signal sonore jusqu'à celle-ci.

6. Lanière selon la revendication 3, **caractérisée en ce que** l'organe de reproduction sonore (41) est lié au boîtier et fait saillie sur celui-ci de manière à pouvoir être introduit dans le pavillon (12) de l'oreille (11) de l'individu afin de transmettre à celle-ci le signal sonore.

7. Lanière selon l'une quelconque des revendications 2 à 6, **caractérisée en ce que** les moyens de réception des branches (22) sont constitués par un orifice (35) ménagé dans chacun des boîtiers (34), la paroi interne (36) de l'orifice (35) étant réalisé dans un matériau déformable élastiquement pour former une liaison de type amovible avec ladite branche (22).

8. Lanière selon la revendication 7, **caractérisée en ce que** chaque orifice (35) est réalisé dans une partie amovible et interchangeable (37) du boîtier (34).

9. Lanière selon l'une quelconque des revendications précédentes, **caractérisée en ce que** le ruban (31) est réalisé en matière souple élastiquement déformable.

10. Lanière selon la revendication 9, **caractérisée en ce que** le ruban (31) est en mousse, par exemple en néoprène

11. Lanière selon l'une quelconque des revendications précédentes, **caractérisée en ce que** des circuits électroniques pour le fonctionnement de l'appareil de communication téléphonique sans fil (40) sont logés dans la partie arrière du ruban (31).

12. Lanière selon l'une quelconque des revendications précédentes, **caractérisée en ce que** l'appareil de communication téléphonique sans fil (40) est une oreillette à la norme Bluetooth.
